Europäisches Patentamt

European Patent Office

Office européen des brevets

(11) Veröffentlichungsnummer: **0 253 064**
**A2**

## (12) EUROPÄISCHE PATENTANMELDUNG

(21) Anmeldenummer: 87104487.1

(22) Anmeldetag: 26.03.87

(51) Int. Cl.⁴: **F16K 7/07**

(30) Priorität: 08.07.86 DE 3622816

(43) Veröffentlichungstag der Anmeldung:
**20.01.88 Patentblatt 88/03**

(84) Benannte Vertragsstaaten:
**AT BE CH DE ES FR GB GR IT LI LU NL SE**

(71) Anmelder: **AVS Ing. J.C. Römer GmbH**
**Prinz-Alfons-Allee 9-11**
**D-8021 Strasslach(DE)**

(72) Erfinder: **Römer, Joachim C.**
**Gistlstrasse 45**
**D-8023 Pullach(DE)**

(74) Vertreter: **Dipl.-Phys.Dr. Manitz Dipl.-Ing.,**
**Dipl.-Wirtsch. Finsterwald Dipl.-Chem.Dr.**
**Heyn Dipl.-Phys. Rotermund Morgan,**
**B.Sc.(Phys.)**
**Robert-Koch-Strasse 1**
**D-8000 München 22(DE)**

(54) **Membranventil für Fluide.**

(57) Ein neuartiges Membranventil zur Steuerung von Fluiden zeichnet sich dadurch aus, daß mindestens der Zulaufbereich (2) oder der Abstrombereich (4), oder aber beide Bereiche des Ventiles durch eine fluiddurchlässige Stützwand (12) abgedeckt wird. Bei einem besonders bevorzugten Ausführungsbeispeil ist die Stützwand aus zwei fluiddurchlässigen Rohrabschnitten (12a, 12b) aufgebaut, die durch eine Trennwand (14) getrennt sind. Die Membran ist hier eine Schlauchmembran, deren Durchmesser etwa gleich dem Außendurchmesser dieses Stützrohres ist. Dieser Aufbau wird durch ein rohrförmiges Gehäuse (10) umschlossen, das die Zustrom-und Abstromanschlüsse (6, 8) für das Fluid trägt. Das grundsätzlich so aufgebaute Ventil kann als fremdgesteuertes Membranventil, eigendruckgesteuertes Membranventil, unter geringer Abwandlung aber auch als direktwirkendes 2/2-Elektromagnet-Wegeventil oder als Rückschlagventil Verwendung finden.

FIG. 1

## Membranventil für Fluide

Die Erfindung betrifft ein Membranventil zur Steuerung von Fluiden, das einen Zustrom-und einen Abstromanschluß für das Fluid, je einen Zustrom-und einen Abstrombereich, die durch eine fluidundurchlässige Trennwand getrennt sind, und eine die beiden Bereiche außerhalb der Trennwand verbindende Steuerkammer aufweist, und mit einer flexiblen Membran, die durch Aufsitzen auf die Trennwand den Zustrom-vom Abstrombereich ·trennt, und durch Abheben in die Steuerkammer die Fluidströmung vom Zustrom-in den Abstrombereich freigibt.

Derartige Membranventile sind zur Steuerung von Druckluft und anderen Fluiden, wie z.B. Öl, Wasser etc. vielfältig im Einsatz und beispielsweise aus dem Prospekt der Firma Bürkert, Ingelfingen, 10000/2/72 bekannt. Üblicherweise ist ein Gehäusegrundteil vorgesehen, das den Zustromanschluß, den Zustrombereich, den Abstrombereich und den Abstromanschluß aufnimmt. Der Abstromanschluß mündet in der Mitte des Gehäuses und ist von dem Zustrombereich ringförmig umgeben. Es ist auch möglich, wie aus dem Prospektblatt 7504, Typ L142 der Firma Sirai Pioltello (Italien) bekannt, den·Zustrombereich in der Mitte des Gehäuses münden zu lassen, so daß er vom Abstrombereich ringförmig umgeben ist. Ein Gehäusedeckel, der die Steuerkammer enthält, wird auf dem Grundteil fluiddicht befestigt, und zwischen die beiden Gehäuseteile ist eine meist - scheibenförmig ausgestaltete Membran eingefügt, die einen meist ringförmigen "Rollbereich" enthält, um einen entsprechenden Membranhub zu gewährleisten.

Als nachteilig hat sich bei dieser Bauart erwiesen,·daß beim Öffnungsvorgang ein starker Druckabfall eintritt, insbesondere jedoch beim Schließvorgang eine plötzliche Druckerhöhung auftritt. Diese Vorgänge sind bei gasförmigen Medien eine Ursache störender kurzzeitiger Druckschwankungen im Netz; bei flüssigen Medien können insbesondere beim Schließschlag Druckspitzen auftreten, die ein Mehrfaches des Betriebsdruckes erreichen, und über die lästige Geräuschbildung hinaus zur Zerstörung z.B. der Anschlußleitungen führen können.

Es ist praktisch unmöglich, derartige Membranventile mit Fremdmedium zu steuern. Der Steuerdruck dürfte nur wenig höher sein als der zu steuernde Fluiddruck, da sonst die Membran in die beiden Strömungsbereiche hineingedrückt und so beschädigt würde.

Bei durch das zu steuernde Medium selbst gesteuerten Ausführungen, sog. servogesteuerten Membranventilen, ist die Steuerkammer mit dem abstromseitigen Anschluß verbunden und eine Drosselöffnung in der Membran vorgesehen; die Verbindung zwischen Steuerkammer und Abstromanschluß wird durch ein Sperrventil gesteuert. Hier lassen sich Schließschläge schon deshalb nicht vermeiden, da sich auch dann, wenn durch · entsprechende Auslegung der Drosselöffnung in der Membran und der Querschnitte der Steuerleitungen ein langsames Absenken der Membran eingestellt wird, über den kurzen Membranweg die starke Strömung über die Trennwandkante nicht ausreichend gedämpft zu reduzieren ist. Kurz von dem Aufsitzen der Membran auf den oberen Rand der Trennwand erhöht sich die Geschwindigkeit des Fluides stark, der Druckwert an dieser Stelle sinkt dadurch erheblich ab, und durch den hydrostatischen Druck in der Steuerkammer wird der restliche Schließvorgang stark beschleunigt. Bei umgekehrter Durchflußrichtung wirkt zunächst ein Staudruck, der sich jedoch beim Annähern der Membran verringert, bis er kurz vor dem Schließen auf Null abfällt und nun ein Unterdruck entsteht, der den Schließvorgang erheblich beschleunigt.

Damit liegt der Erfindung die Aufgabe zugrunde, ein Membranventil der genannten Art mit verbessertem Öffnungs-und Schließverhalten so auszubilden, daß auch noch die Möglichkeit besteht, es als fremdmedium-gesteuertes Membranventil mit großem Steuerdruckbereich einzusetzen.

Zur Lösung der Aufgabe ist bei einem Membranventil der eingangs genannten Gattung vorgesehen, daß eine mindestens einen der Be reiche Zustrombereich und/oder Abstrombereich überdeckende fluiddurchlässige Stützwand vorgesehen ist und daß die flexible Membran durch Vorspannung und/oder Fluiddruck zur Anlage an Stützwand und an die Trennwand bringbar ist.

Die Stützwand beeinflußt das Öffnungs-und Schließverhalten überraschenderweise so, daß das Auftreten von Schließschlägen praktisch vollständig unterdrück wird und auch die Druckabsenkung beim Öffnen günstiger erfolgt. Diese Auswirkung ist besonders dann günstig, wenn die Stützwand beide Bereiche überdeckt.

Die Stützwände können aus gelochten Blechen, steifen Drahtgittern u.ä. bestehen, es hat sich jedoch als besonders vorteilhaft erwiesen, wenn nach Anspruch 2 so·vorgegangen wird, daß die Stützwand aus gesintertem feinporigen Material gebildet ist.

Die fein unterteilte, aus der Sintermaterial-Stützwand austretende Strömung hebt die Membran sehr weich ab und läßt sie auch wieder sehr weich aufsetzen. Es bildet sich insbesondere in der Umgebung der Trennwand ein Restströmungsbereich aus, der dieses Verhalten noch fördert. Zusätzlich filtert das feinporöse Material das durchströmende Fluid. Die Membran wird über die gesamte Fläche abgestützt, so daß sie auch bei Druckschwankungen in einem der Bereiche oder in beiden Bereichen nich durchschwingt. Damit wird die Betriebslebensdauer der Membran erhöht.

Diese Vorteile sind bereits mit einem Membranventil erzielbar, das die Stützwand in einem Gehäuse herkömmlicher Bauart enthält; besondere Vorteile können jedoch gemäß Anspruch 3 dadurch erreicht werden, daß das Gehäuse rohrförmig ausgebildet ist, mit dem Zustromanschluß und dem Abstromanschluß jeweils an den Rohrenden, daß die Stützwand ein fluiddurchlässiges Stützrohr mit gegen den Innendurchmesser des Gehäuses kleinerem Außen durchmesser ist und daß die Membran eine flexible Schlauchmembran ist, die mindestens an einem Rohrende insbesondere zwischen dem Gehäuse und dem Stützrohr eingespannt ist.

Neben der vereinfachten Herstellung eines derartigen Membranventiles erweist sich das Strömungsverhalten beim Öffnen und Schließen als besonders vorteilhaft. Die Schlauchmembran - schließt, wie bei Ausführung mit durchsichtiger Gehäuseaußenwand beobachtet werden kann, so, daß zunächst die äußeren, abgelegenen Bereiche sich an die Stützwand anlegen und daraufhin das Anlegen längs der Stützwand zur Trennwand hin fortschreitet. Dabei ist die Schließstrecke beliebig lang ausführbar.

Da bei herkömmlichen Membran-Sitzventilen die 100 %-ige Durchflußmenge bei einem Membranhub erreicht wird, der ca. 1/4 des Sitzdurchmessers beträgt, und die Schließstrecke damit auf diesen Wert beschränkt ist, ist bei gleicher Baulänge des Schlauchmembranventils bereits ein mehrfacher Wert der "hydrodynamischen Knautschzone" zu erreichen.

Neben dem durch den Staudruck bedingten weicheren Aufsetzen der Membran auf die Trennwand stellt dieser Umstand diese Voraussetzung dafür dar, "rückprallfrei" die kinetische Energie des durchfließenden Mediums in Reibungsarbeit umzusetzen, also Schließschläge zu unterdrücken.

Der Öffnungsvorgang erfolgt in umgekehrter Weise, d.h. zunächst hebt der Anteil der Membran um die Trennwand ab und die abgehobene Membranstrecke vergrößert sich in beiden Richtungen zu den Einspannenden der Membran.

Das Strömungsverhalten bei geöffnetem Ventil ist dabei durch die geringe Umlenkung der Strömung weitaus verbessert gegenüber der herkömmlichen Gehäusebauart, bei der die Strömung um die Trennwand eine Umlenkung um 180° erfährt.

Außerdem ist est mit dieser Bauart möglich, kaum über die sonstige Rohrleitungsführung herausstehende Membranventile zu bauen, so daß bei parallelen Rohrleitungen der erforderliche Mittenabstand herabgesetzt werden kann. Die Membran selbst ist kostengüstig durch Abschneiden von vorgefertigten Schläuchen des entsprechenden Schlauchmaterials herzustellen; sie ist wegen des geringen Hubes und der Abstützung, die ja nicht nur auf der Stützwand, sondern bei geöffnetem Ventil an der Gehäuse-Innenwand erfolgt, auch weit weniger Gefährdung ausgesetzt, als es bei herkömmlichen Membranventilen der Fall ist. Es ergibt sich so nicht nur eine große Einsparung bei den Herstellungskosten, sondern auch eine Verlängerung der bei derartigen Ventilen in erster Linie durch die Membran bestimmten Lebensdauer.

Wird auf das Ausfiltern kleiner mitgeschwemmter Teilchen kein Wert gelegt, so kann, auch unter Beibehaltung des schlagfreien Öffnungs-und Schließverhaltens, nach Anspruch 4 so vorgegangen werden, daß die Stützwand längliche Durchbrüche aufweist. Dadurch kann der Strömungswiderstand, den das Membranventil durchströmendem Fluid in geöffnetem Zustand noch entgegengesetzt, weiter herabgesetzt werden. Selbstverständlich können, wie bereits vor der Besprechung des Anspruches 2 bemerkt, gelochte Stützwände usw., das heißt also solche mit runden Durchbrüchen Verwendung finden. Jedoch hat sich bei dem rohrförmigen Ventil die Ausbildung länglicher Durchbrüche in Axialrichtung des Rohres als besonders vorteilhaft erwiesen.

Es kann dabei gemäß Anspruch 5 so vorgegangen werden, daß die Stützwand aus in Strömungsrichtung ausgerichteten Stegen besteht, deren membranseitige Flächen zu einer gemeinsamen Hüllfläche gehören. Derartige Stützflächen sind aus Kunststoff, aber auch aus Metall besonders einfach herstellbar.

Eine weitere Verbesserung des Strömungsverhaltens bei weiterhin ausgezeichneter Schlagfreiheit beim Öffnen und Schließen kann gemäß der vorteilhaften Weiterbildung nach Anspruch 6 dadurch erreicht werden, daß die Stützwand kegelstumpfförmig ausgebildet ist, mit an der Membraneinspannseite liegendem großem Durchmesser, und gegebenenfalls mit einer an der Trennwand anschließenden weiteren kegelstumpfförmigen Stützwand. Bei der rohrförmigen Ausbildung des Membranventils ist so eine Verkleinerung des Innendurchmessers des Rohres möglich bei gleichbleibender Durchflußgröße, da sich die Strömung mit geringerer Umlenkung ausbilden läßt und der Raum um die beiden kegelstumpfförmigen Stützwände als Steuerkammer bzw. Überströmkammer zur Verfügung steht. Ein gutes Anlegen der Membran ist gleichwohl unter Beeinflussung durch das Steuermedium in der Steuerkammer ohne weiteres möglich.

Diese kegelstumpfförmige Stützwand braucht dabei nicht unbedingt aus Stegen ausgebildet sein; auch bei Verwendung von porösen Stützwänden, z.B. aus Sintermaterial von gelochten Blechen etc. ergibt sich verbessertes Strömungsverhalten bei weiterhin "weichem" Schließen und Öffnen.

Die Anwendung eines derartigen Membranventils ist aber nicht nur auf die normale Durchflußsteuerung beschränkt; wenn beispielsweise eine Membran verwendet wird, die nur den Zustrombereich überdeckt und ein kurzes Stück hinter der Trennwand endet, so ergibt sich ein strömungsgünstiges Rückschlagventil, das günstige Durchflußwerte mit dem erfindungsgemäß erreichten Schließ-und Öffnungsverhalten zeigt. Dabei kann beispielsweise die abstromseitige Stützwand weggelassen werden und die gegebenenfalls mit Strömungskegel versehene Trennwand mit der zustromseitigen Stützwand und der Membran als Verschlußeinheit ausgestaltet und an der Zustromseite des Gehäuses befestigt werden.

Sowohl beim erfindungsgemäßen Ventil mit herkömmlicher Gehäuseart wie auch insbesondere bei dem besonders vorteilhaften koaxial rohrförmig aufgebauten Membranventil ist es nach Anspruch 8 möglich, so zu verfahren, daß die Membran durch ein Steuermittel über einen Steuermittelanschluß und eine diesen Anschluß mit der Steuerkammer über der Membran verbindende Leitung druckmittelbeaufschlagt ist.

Es ist auf diese Weise der Aufbau eines fremdgesteuerten Membranventils mit weitem Vorsteuerdruckbereich möglich. Dadurch können Fluide, die erheblichen Druckschwankungen unterliegen, ohne Gefährdung der Membran mit einem Steuermedium-Druckwert gesteuert werden, der immer sicher über dem höchsten zu erwartenden Druckwert liegt. Da die Membran flexibler gestaltet werden kann als die freitragende Membran bei herkömmlicher Bauart, ergibt sich durch die rohrförmige Bauart dazu noch ein Öffnen bereits bei geringeren Druckunterschieden zwischen Vorsteuermedium und gesteuertem Fluid, also ein Mengenverstärker mit sehr geringer Eigenreibung.

Die vorteilhafte Weiterbildung nach Anspruch 9, die darin liegt, daß zu dem Vorsteuerventil eine zweite, mit dem Abstromanschluß verbundene Leitung führt, daß die Membran eine Drosselöffnung mit geringerem Durchstrom als die beiden Leitungen aufweist und daß das Vorsteuerventil Verbindung zwischen den beiden Leitungen sperrt bzw. freigibt, führt zu einem eigengesteuerten Servomembranventil mit ausgezeichnetem Durchströmungsverhalten, schlagfreiem Öffnungs-und Schließverhalten und geringerem Platzbedarf. Es können dabei die bekannten handgesteuerten, fluidgesteuerten oder insbesondere elektromagnetisch gesteuerten, sowie druckregelnde oder druckbegrenzende Vorsteuerventile, oder Kombinationen aus diesen Vorsteuerventil-Bauarten eingesetzt werden.

Eine weitere vorteilhafte Weiterbildung ergibt sich nach Anspruch 10 dadurch, daß die Schlauchmembran mindestens im zustromseitigen Bereich weichmagnetisch ist, daß um diesen Bereich ein Magnetkreis angeordnet ist, wobei das Gehäuse im Bereich der Pole des Magnetkreises weichmagnetische Abschnitte besitzt, und daß in der Schlauchmembran in diesem Bereich eine Enlastungsöffnung vorgesehen ist.

Eine weichmagnetische Schlauchmembran ist entweder durch Auf-oder Einfügen von weichmagnetischen Metallstreifen an bzw. in die Membran oder aber durch Einarbeiten feinverteilten weichmagnetischen Werkstoffes in den elastischen Membranwerkstoff herstellbar. Die Entlastungsöffnung ist in diesem Fall nur dazu nötig, daß das in der Steuerkammer befindliche Fluid, das in diesem Falle ja nicht zum Steuermittel gehört, aus der Steuerkammer in den Überströmbereich eintreten kann. Durch die Größe dieser Entlastungsöffnung ist auf einfache Weise die Öffnungs-und Schließgeschwindigkeit dieser Ventilbauart beeinflußbar.

Zusammengefaßt kann festgestellt werden, daß die Erfindung ein Membranventil schafft, das den gesamten Einsatzbereich herkömmlicher Membranventile abdeckt, weitere Einsatzbereiche wie Rückflußverhinderer und direktwirkendes Magnetventil zuläßt, und dabei in der vorteilhaften Ausführungsform nach Anspruch 3 ff. auch noch große Fertigungsvorteile und Vorteile der Standzeit bietet.

Es kann beispielsweise festgestellt werden, daß die symmetrischen, einfach aufgebauten Gehäuseteile es ermöglichen, daß beispielsweise bei einem 1/2"-Ventil gegenüber der herkömmlichen Bauart die Werkzeugkosten auf weniger als 1/8 verringert werden können. Dazu kommen die Vorteile des geringeren Materialbedarfs sowie der weitgehendst rotationssymmetrischen spanabhebenden Bearbeitung.

Ausführungsbeispiele der Erfindung werden nachfolgend anhand der Zeichnung näher erläutert; in dieser zeigt:

Fig. 1 eine Ausführungsform eines erfindungsgemäß koaxial aufgebauten Membranventiles als fremdgesteuertes Ventil,

Fig. 2a bis 2c das Verhalten der Membran beim Schließvorgang im Ventil nach Figur 1,

Fig. 3 eine Ausführungsform des erfindungsgemäßen Membranventils als eigengesteuertes Ventil,

Fig. 4 eine Ausführungsform als Rückfluß-Verhinderungsventil (Rückschlagventil), und

Fig. 5 eine Ausführungsform des erfindungsgemäßen Ventiles als direktwirkendes 2/2-Wege-Elektromagnetventil, und

Fig. 6 eine andere Ausführungsform des Membranventils nach Fig. 1.

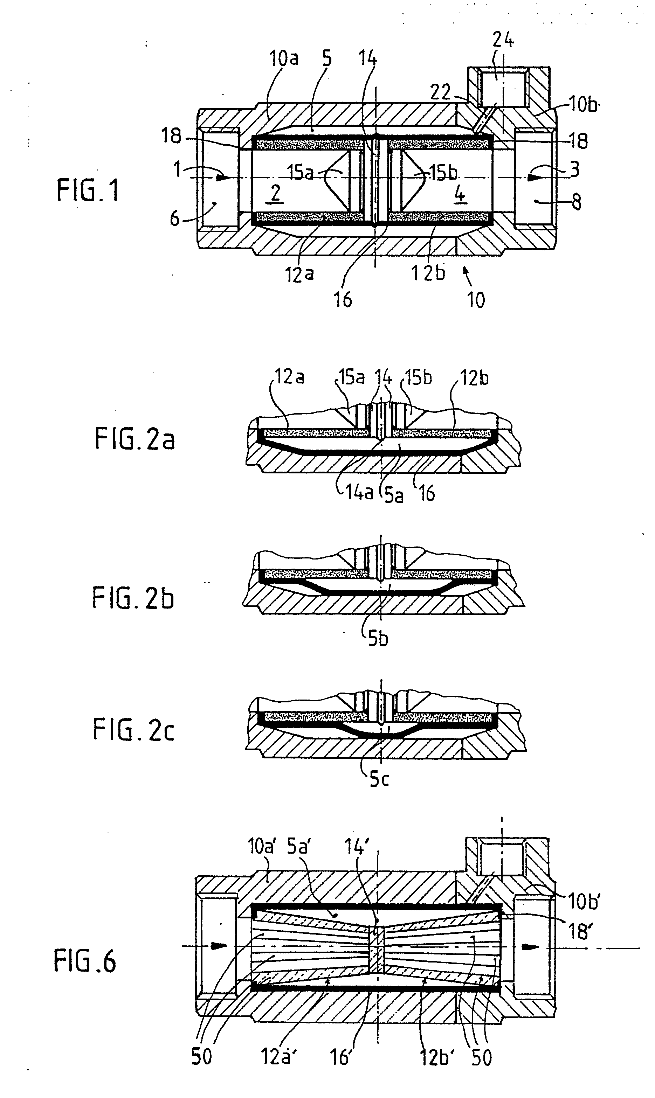

In Fig. 1 ist ein im wesentlichen koaxial aufgebautes Membranventil gezeigt. Es besitzt ein Gehäuse 10, das aus einem rohrförmigen Gehäuseteil 10a und einem den Anschluß für das Fremdsteuerungsmedium tragenden abstromseitigen Gehäuseteil 10b besteht. Im Gehäuseteil 10a ist ein üblicher Einschraub-Anschluß 6 für die Zuströmung des zu steuernden Fluides enthalten, und daran schließt sich ein vergrößerter Raum an. Der stromseitige Gehäuseteil 10b, der durch Schrauben (nicht gezeigt) oder auf andere Weise mit dem Gehäuseteil 10a fluiddicht verbindbar ist, weist den Abstrom-Einschraubanschluß 8 und einen Fremdsteueranschluß 24, von dem eine Leitung 22 zum Inneren dieses Gehäuseteiles führt, auf. In dieses Gehäuse 10 ist eine rohrförmige Stützwand 12 eingefügt, die beispielsweise aus zwei getrennten Stücken 12a und 12b an der Zustrom-bzw. Abstromseite besteht, und zwischen diese beiden Abschnitte 12a und 12b ist eine Trennwand 14 eingefügt, die an beiden Seiten mit Strömungskegeln 15a bzw. 15b versehen ist. Diese Strömungskegel, die das Strömungsverhalten des gesteuerten Fluides verbessern, können vorteilhafterweise als an der Spitze abgerundete Kugel mit einem Spitzenwinkel von ca. 90° ausgebildet sein. Die Stützrohrabschnitte 12a und 12b bestehen vorteilhafterweise aus einem fluiddurchlässigen porösen Sintermaterial, das je nach Art des zu steuernden Fluides aus gesinterten Kupferkügelchen, Edelstahlkügelchen etc. bestehen kann. Die Trennwand 14 ist vorzugsweise bündig mit dem Außendurchmesser der Stützwand oder steht leicht über diese vor, wobei sie im zweiten Fall eine Sitzkante 14a (Figur 2a) bildet. Über das rohrförmige Gebilde aus Stützrohren 12a und 12b und der Trennwand 14 ist als Membran ein flexibler fluidundurchlässiger Schlauch 16 geschoben, dessen Durchmesser im entspannten Zustand etwa dem Außendurchmesser des Stützrohres 12 entspricht, und beim Zusammenbau wird die Membran an Einklemmbereichen 18 zwischen die Enden des Stützrohres 12 und die dortige Wand des Gehäuses 10 eingeklemmt. Es sind so ein Zustrombereich 2, ein Abstrombereich 4 und eine Steuerkammer 5 durch entsprechende Ausgestaltung des Gehäuseinnenraumes gebildet. Die Membran 16 bewegt sich bei ihrer Betätigung in der Steuerkammer 5 zwischen Stützwand 12 und Innenwand des Gehäuses 10. Die von dem Steueranschluß 24 führende Leitung 22 mündet in der Steuerkammer 5.

Der Betrieb dieses fremdgesteuerten Membranventiles ist anhand der Fig. 1 und 2a bis 2c leicht verständlich. Es fließt in Richtung des Pfeiles 1 das zu steuernde Medium durch den Anschluß 6 in den Zustrombereich 2. Wenn sein Druck über dem in der Steuerkammer 5 herrschenden Druck liegt, wird die Membran 16 angehoben, so daß sie sich an die Innenseite des Gehäuses 10 anlegt, und es erfolgt eine konzentrische Strömung durch den nun von der Membran 16 freigegebenen Überströmbereich 5a in den Abstrombereich 4 und Richtung des Pfeiles 3 durch den abstromseitigen Anschluß 8. Diese Strömung wird durch die kegelförmigen Strömungsansätze 15a und 15b unterstützt. Etwaige schädliche Verunreinigungen, die von dem zu steuernden Fluid mitgerissen werden, werden in dem Sintermaterial des Stützrohres 12 aufgefangen. Wird nun über den Anschluß 24 für das Steuermedium und die Leitung 22 die Steuerkammer 5 druckbeaufschlagt, und zwar mit einem Druck, der über dem des zu steuernden Fluides liegt, so wird die Membran dazu gebracht, sich von der Innenwand des Gehäuses abzulösen und wieder an das Stützrohr 12 anzulegen. Im voll geöffneten Zustand liegt die Membran 16, wie in Fig. 2a dargestellt, vollständig an der Wand an, während bei Druckbeauf schlagung durch das Steuermedium ein Abheben der Membran 16 von der Innenwand des Gehäuses 10 und Anlegen an das Stützrohr zunächst in den äußeren Bereichen erfolgt (Fig. 2b), wobei sich der Überströmbereich 5 b verringert. Dieses Anlegen schreitet von beiden Seiten zur Dichtkante 14a der Trennwand 14 fort, bis zuletzt nur noch ein kleiner Überströmbereich 5 c um die Sitzkante herum geöffnet bleibt (Fig. 2c). Entsprechend nimmt die Strömungsmenge des zu steuernden Fluides ab. Schließlich wird auch der Mittelteil der Membran 16 an die Sitzkante 14a angedrückt, und das Ventil ist geschlossen, d.h. die Membran 16 nimmt wieder die Stellung gemäß Fig. 1 ein. Dieser Vorgang erfolgt derart "weich", daß der schädliche Schließschlag praktisch ausgeschaltet ist.

Das Öffnen des Ventiles bei Entlastung des Anschlusses 24 von dem Druck des Steuermediums erfolgt in umgekehrter Reihenfolge entsprechend den Fig. 2c bis 2a.

Wie aus der Darstellung leicht zu ersehen ist, genügt ein kleiner Ringraum, der den Überströmbereich 5a bildet, da die Strömung mit nur geringer Umlenkung erfolgt und da bereits eine Durchmesservergrößerung von ca. 25 % einen Querschnitt des Überströmbereiches 5 ergibt, der gleich dem Querschnitt der Anschluß-Rohrleitungen ist. Die Schließ-bzw. Öffnungseigenschaften des Ventils sind durch entsprechende Bemessung der Längen der Stützrohrabschnitte 12a und 12b, bezogen auf den Durchmesser, leicht zu beeinflussen.

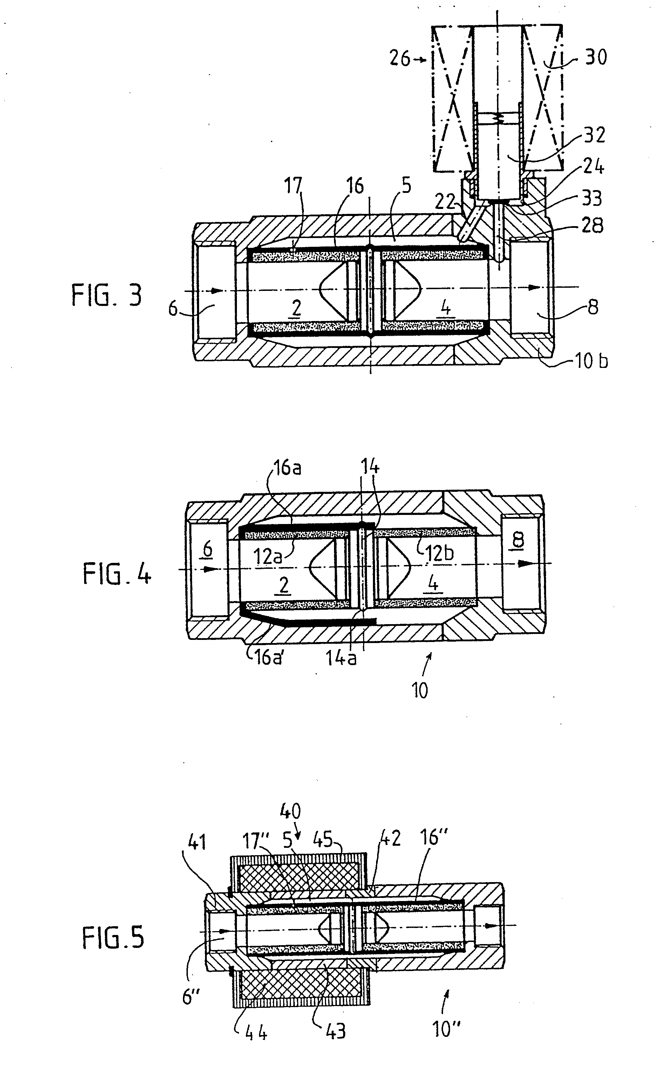

Bei der weiteren Ausführungsform nach Fig. 3, bei der nur die zusätzlichen Bauteile beschrieben sind, ist ein Vorsteuerventil 26, hier ein elektromagnetisch betätigtes 2/2-Wegeventil, auf den abstromseitigen Gehäuseteil 10b aufgesetzt, und es ist eine an dem Anschluß 24 in einem Sitz endende Leitung 28 eingefügt, die je nach Beaufschlagung des Ventils 26 durch die am Anker 32 vorgesehene Dichtung 33 freigegeben oder abgesperrt werden kann.

Die Membran ist mit einer Drosselöffnung 17 im Zustrombereich 2 versehen, deren Strömungswert kleiner als der der Leitungen 22 und 28 ist. Durch diese Drosselöffnung füllt sich die Steuerkammer 5 mit Medium aus dem Überströmbereich 5a. Bedingt durch die dynamischen Druckverhältnisse im Überströmbereich 5a übersteigt der sich aufbauende Druck in der Steuerkammer 5 den mittleren Druckwert im Überströmbereich 5a, so daß die Membran 16 an das Stützrohr gedrückt wird. Das Ventil ist so geschlossen. Wird das Vorsteuerventil geöffnet, so wird die Steuerkammer 5 zum Abstromanschluß 8 hin druckentlastet, da durch die Drosselöffnung 17 weniger Druckfluid nachfließt, als über die Leitungen 22 und 28 abfließt, und die Membran hebt in der bereits dargestellten Weise ab. Das Ventil wird geöffnet. Dabei werden die in Fig. 2a-2c dargestellten Vorgänge beim Öffnen bzw. Schließen der Membran auch hier beibehalten.

Fig. 4 zeigt eine Ausführungsform des Membranventils als Rückfluß-Verhinderungs-oder Rückschlagventil. Die Membran 16a überdeckt in diesem Falle nur den Zustrombereich 2 bis kurz hinter der Trennwand 14 und wird durch über den Zustromanschluß 6 einfließendes Fluid zur Anlage an die Innenwand des Gehäuses 10 angehoben (16a'), so daß ein Durchstrom zum Abstrombereich 4 und zum Abstromanschlußbereich frei wird. Tritt im Abstromraum 4 ein höherer Druck auf als im Zustrombereich 2, so schließt, wie in der oberen Hälfte der Fig. 4 dargestellt, die Membran 16a, indem sie sich an den Stützrohrabschnitt 12a anlegt.

Bei dieser Ausführung kann, wenn die Trennwand 14 mit dem Stützrohrabschnitt 12 fest verbunden und die daraus bestehende Baueinheit zusammen mit der Membran 16 a an dem Gehäuse 10 befestigt ist, der abstromseitige Stützrohrabschnitt 12b auch weggelassen werden.

In Fig. 5 ist ein direktwirkendes elektromagnetisch betätigtes 2/2-Wegeventil mit grundsätzlich gleichem Aufbau wie die vorhergehenden Ausführungsbeispiele gezeigt. In diesem Falle ist die flexible Schlauchmembran 16" magnetisierbar zu gestalten. Das kann beispielsweise dadurch geschehen, daß beim Extrudieren in das elastomere Material, aus dem die Schlauchmembran gefertigt wird, fein verteilte Eisenpartikel oder ein anderer fein verteilter magnetisierbarer Werkstoff eingearbeitet werden, oder es können an der Schlauchmembran magnetisierbare Metallteile, z.B. in schmaler Längsstreifenform, angebracht werden. Dabei ist der Magnetkreis 40 dieses Ventils wie üblich aus Weicheisenmagnetpolstücken 41 (gleichzeitig der den Zulaufschluß 6" enthaltende Teil des Ventilgehäuses 10"), 42, einem dazwischenliegenden unmagnetisierbaren Teil 43 des Gehäuses 10", einem weichmagnetischem Joch 45 und einer Wicklung 44 aufgebaut. Durch den nur geringen Hub der Schlauchmembran is ein sicheres Schalten dieser Magnetausführung gewährleistet. In der Membran 16 "ist eine Drosselbohrung 17" vorgesehen, die in ihrer Größe dem gewünschten Schaltverhalten entsprechend festgelegt werden kann. Durch die günstigen Überströmungsverhältnisse der konzentrischen Ventilbauart ist es möglich, mit sehr geringem Hub einen erheblichen freien Durchflußquerschnitt zu schaffen. Das Schalten erfolgt geräuschlos, und es treten bei gasförmigen wie flüssigen Fluiden keine Öffnungs-und Schließschläge auf. Dadurch eignet sich ein derartiges Ventil, wenn es aus entsprechenden Werkstoffen gefertigt ist, insbesondere für medizinische Zwecke, beispielsweise für verschiedene Fluidleitungen, die in Intensivstationen zur Überwachung und therapeutischen Behandlung der einzelnen Patienten geführt sind. Die Patienten werden in diesem Falle nicht durch die sonst auftretenden Klick-Geräusche gestört und belästigt.

Figur 5 ist eine weitere Ausführungsform mit im Grundsatz gleichem Aufbau wie die vorhergehenden Ausführungsbeispiele gezeigt. Das Gehäuse 10' hat in diesem Falle,eine anders als beim Ausführungsbeispiel nach Figur 1,glatt durchlaufende Innenbohrung, an die sich die Membran 16' bei geöffnetem Ventil anlegen kann. Die Stützwände 12a' und 12b' bestehen in diesem Fall use Längsstegen 50, das heißt die gesamte Stützwand besteht aus zwei käfigartigen, kegelstumpfförmigen Gebilden, die am zu-bzw. abstromseitigen Ende die Membran an den Stellen 18' einspannen, sonst von dem Boden her jedoch freie Durchströmung gestatten, und an dem Ende mit kleinerem Durchmesser über die geschlossene Trennwand 14' verbunden sind. Wie bei der Ausführung nach Figur 1 ist auch hier eine Fremdsteuerung gezeigt, die durch die erfindungsgemäße Ausgestaltung der abgestützten Membran große Freiheit in der Wahl des Steuermitteldruckes gegenüber dem Druck des zu steuernden Fluides gewährt. Die schrägliegenden Mantelflächen mit den zwischen den Stegen 50 gebliebenen länglichen Öffnungen befördern den Durchfluß sehr gut, es können jedoch gegebenenfalls auch hier die aus den früheren Ausführungsbeispielen bekannten Umlenk-oder Strömungskegel (15a, 15b in Figur 1) eingesetzt werden.

Wie sich erkennen läßt, ist mit den gezeigten Ausführungsbeispielen der gesamte Anwendungsbereich derartiger Ventile keineswegs erschöpfend dargestellt. Es sind beispielsweise auch Bauarten denkbar, bei denen die Schlauchmembrane nicht nur gegen innere, sondern auch gegen äußere Dichtkanten schließt, so daß auch Mehrwegeventile einfach und kostengünstig gefertigt werden können. Auch in diesem Fall können die Stützwände aus porösen Sinterwerkstoffen (Filterwirkung) oder aber auch aus fein oder grob gelochten Blechen, stabilen Gittern unterschiedlicher Maschenweite usw. gefertigt werden.

Es sei noch darauf hingewiesen, daß auch in der vorhergehenden Beschreibung angeführte, aber zur Zeit nicht beanspruchte Merkmale als erfindungswesentlich angesehen werden.

**Ansprüche**

1 Membranventil (10) zur Steuerung von Fluiden, das einen Zustrom-(6) und einen Abstromanschluß für das Fluid, je einen Zustrom-(2) und einen Abstrombereich (4), die durch eine fluidundurchlässige Trennwand (14) getrennt sind, und eine die beiden Bereiche außerhalb der Trennwand verbindende Steuerkammer (5) aufweist, und mit einer flexiblen Membran (16), die durch Aufsitzen auf die Trennwand (14) den Zustrom-(2) vom Abstrombereich (4) trennt, und durch Abhaben in die Steuerkammer die Fluidströmung vom Zustrom-in den Abstrombereich freigibt,
dadurch **gekennzeichnet**, daß eine mindestens einen der Bereich Zustrombereich (2) und/oder Abstrombereich (4) überdeckende fluiddurchlässige Stützwand (12) vorgesehen ist und daß die flexible Membran (16) durch Vorspannung und/oder Fluiddruck zur Anlage an die Stützwand (12) und an die Trennwand (14) bringbar ist.

2. Membranventil nach Anspruch 1, dadurch **gekennzeichnet,** daß die fluiddurchlässige Stützwand (12) aus gesintertem, feinporigen Material gebildet ist.

3. Membranventil nach Anspruch 1 oder 2, dadurch **gekennzeichnet,** daß das Gehäuse (10) rohrförmig ausgebildet ist, mit dem Zustromanschluß (6) und dem Abstromanschluß (8) jeweils an den Rohrenden, daß die Stützwand ein fluiddurchlässiges Stützrohr (12) mit gegen den Innendurchmesser des Gehäuses kleinerem Außendurchmesser ist und daß die Membran eine flexible Schlauchmembran (16) ist, die mindestens an einem Rohrende insbesondere zwischen dem Gehäuse (10) und dem Stützrohr eingespannt (bei 18) ist.

4. Membranventil nach einem der vorangehenden Ansprüche, dadurch **gekennzeichnet,** daß die Stützwand (12', 12") axiale längliche Durchbrüche aufweist.

5. Membranventil nach Anspruch 4, dadurch **gekenzeichnet,** daß die Stützwand (12', 12") aus in Strömungsrichtung ausgerichteten Stegen (50) besteht, deren membranseitige Flächen zu einer gemeinsamen Hüllfläche gehören.

6. Membranventil nach einem der Ansprüche 3 bis 5, dadurch **gekennzeichnet,** daß die Stützwand (12') kegelstumpfförmig ausgebildet ist, mit dem großen Durchmesser an der Membran-Einspannseite (18') und gegebenenfalls mit einer an die Trennwand (14') anschließenden weiteren kegelstumpfförmigen Stützwand (12").

7. Membranventil nach einem der vorangehenden Ansprüche, dadurch **gekennzeichnet,** daß an der Trennwand (14) im Zustrombereich (2) und im Abstrombereich (4) Strömungskegel (15a, 15b) vorgesehen sind.

8. Membranventil nach einem der Ansprüche 3 bis 7, dadurch **gekennzeichnet,** daß die Membran über einen Steuermittelanschluß (24) und eine diesen Anschluß mit der Steuerkammer (5) verbindende Leitung (22) mit Druckmittel beaufschlagbar ist.

9. Membranventil mit einem auf das Gehäuse (10) aufgebauten Vorsteuerventil (26) für das Steuermedium, dadurch **gekennzeichnet,** daß zu dem Vorsteuerventil eine zweite, mit dem Abstromanschluß (8) verbundende Leitung (28) führt, daß die Membran (16) eine Drosselöffnung (17) mit geringerem Durchstrom als die beiden Leitungen (22, 28) aufweist und daß das Vorsteuerventil (26) Verbindung zwischen den beiden Leitungen (22, 28) sperrt beziehungsweise freigibt.

10. Membranventil nach einem der Ansprüche 3 bis 7, dadurch **gekennzeichnet,** daß die Schlauchmembran (16) mindestens im zustromseitigen Bereich weichmagnetisch ist, daß um diesen Bereich ein Magnetkreis (40) angeordnet ist, wobei das Gehäuse (10) im Bereich der Pole des Magnetkreises weichmagnetische Abschnitte (41, 42) besitzt, und daß in der Schlauchmembran (16) in diesem Bereich eine Entlastungsöffnung (17) vorgesehen ist.

**FIG.1**

**FIG.2a**

**FIG.2b**

**FIG.2c**

**FIG.6**

FIG. 3

FIG. 4

FIG.5